Europäisches Patentamt

**European Patent Office**

**Office européen des brevets**

(11) Numéro de publication: **0 208 564**
**B1**

# FASCICULE DE BREVET EUROPEEN

(45) Date de publication du fascicule du brevet:
02.08.89

(51) Int. Cl.⁴: **B23K 26/00**

(21) Numéro de dépôt: **86401059.0**

(22) Date de dépôt: **20.05.86**

(54) **Procédé et appareil de fabrication d'un emballage en tôle métallique cylindrique par soudage au moyen d'un faisceau laser.**

(30) Priorité: **12.06.85 FR 8508891**

(43) Date de publication de la demande:
**14.01.87 Bulletin 87/3**

(45) Mention de la délivrance du brevet:
**02.08.89 Bulletin 89/31**

(84) Etats contractants désignés:
**AT BE CH DE GB IT LI LU NL SE**

(56) Documents cités:
**US-A- 2 047 964**
**US-A- 4 341 943**

(73) Titulaire: **CARNAUD EMBALLAGE, 65 Avenue Edouard Vaillant, F-92100 Boulogne sur Seine(FR)**

(72) Inventeur: **Rivière, Maurice, 14 Allée des Myosotis, F-78390 Bois d'Arcy(FR)**

(74) Mandataire: **CABINET BONNET-THIRION, 95 Boulevard Beaumarchais, F-75003 Paris(FR)**

ACTORUM AG

## Description

La présente invention concerne un procédé de soudage par rayon laser d'éléments d'emballage cylindriques ou de forme, notamment du type boîte à conserve ou boîtiers pour conditionnement de produits industriels.

Il a été proposé dans la demande de brevet français déposée le 5 avril 1983, sous le N° 83.05 525 et publiée sous le N° 2 543 923 un récipient pressurisé du type "bombe aérosol" constitué d'une part par un corps de faible épaisseur, réalisé par filage d'une pastille métallique, comportant une paroi latérale et un fond, d'autre part par un dôme rapporté sur la bordure supérieure dudit corps, et par une coupelle porte-valve fixée par sertissage sur la bordure supérieure de ce dôme. Ce corps et ce dôme sont solidarisés par une soudure faite au moyen d'un faisceau laser. Ils présentent à cet effet deux zones d'extrémités munies de surfaces angulaires planes situées dans un plan sensiblement perpendiculaire à l'axe du récipient et qui coopèrent entre elles.

Le corps et le dôme étant réalisés en deux matériaux différents, un joint d'étanchéité peut être disposé entre les zones en contact pour éviter un effet de pile qui entraînerait une corrosion de celles-ci.

L'invention a pour objet une simplification du procédé de fabrication d'un tel récipient.

La présente invention propose à cet effet un procédé de fabrication d'un emballage en tôle métallique, du genre boîte de conserve, par soudage au moyen d'un faisceau laser consistant à placer en recouvrement deux zones des parties à souder, celles-ci ayant été préalablement découpées et/ou conformées, à assembler et à souder ces deux zones par focalisation d'un faisceau laser et déplacement relatif entre ledit faisceau et lesdites zones le long d'une ligne de soudage prédéterminée, caractérisé en ce qu'il consiste, prealablement au soudage, à amincir par une opération de formage au moins l'une desdites zones et à focaliser ledit faisceau laser sur une zone amincie.

On a constaté que l'amincissement préalable ne modifiait pas de façon notable la résistance de l'emballage, notamment sa résistance à l'éclatement, au voisinage de la soudure. Cet amincissement de la zone recevant directement le faisceau laser permet une fusion totale dans toute l'épaisseur de la zone amincie et une pénétration partielle du cordon soudé dans l'épaisseur de l'autre zone. Si les deux zones en recouvrement sont amincies, on peut en outre, réaliser une soudure sans surépaisseur.

Etant donné l'amincissement préalable des zones à souder, un laser de puissance inférieure à 1,5 kW est suffisant pour réaliser le soudage de ces pièces à une vitesse pouvant atteindre 60 m/mn, ce qui correspond à une vitesse de production courante.

Dans une forme préférentielle le procédé de l'invention est caractérisé en ce que:

— on amincit au moins l'un de deux bords opposés transversaux d'un flan de tôle prédécoupé;
— on roule ce flan pour former une virole en amenant un bord transversal aminci en recouvrement de l'autre bord transversal selon une ligne de soudage longitudinale;
— on soude ces deux bords le long de ladite ligne de soudage par ledit déplacement relatif.

Ces étapes permettent de définir la virole qui constitue la partie essentielle du corps de l'emballage mais le concept de l'invention est aussi valable pour fixer à ladite virole le fond et/ou le couvercle (éventuellement un dôme pour certains articles du type "bombe aérosol") et dans ce cas le procédé est complété et caractérisé en ce que:

— on amincit, selon au moins une ligne de soudage circulaire, au moins une des deux bordures de ladite virole;
— on rapporte au moins un élément préalablement embouti à l'intérieur d'une bordure amincie de cette virole;
— on soude le ou chaque élément rapporté à la virole par déplacement relatif entre ledit faisceau et ladite virole, le long d'une ligne de soudure circulaire située dans ladite bordure amincie.

Ce procédé, tout en permettant d'obtenir des emballages ayant la même apparence que des emballages aluminium monoblocs, entraîne une réduction des coûts de fabrication du fait de la diminution de la quantité de matière utilisée.

Les différents éléments de l'emballage étant en un même matériau, l'emploi d'un joint d'étanchéité n'est plus nécessaire.

Un tel procédé est utilisable avec des tôles recouvertes ou non d'un dépôt métallique (fer blanc, étain mince, chrome, oxyde de chrome).

Les caractéristiques et avantages de l'invention ressortiront d'ailleurs de la description qui va suivre, à titre d'exemple, en référence aux dessins annexés sur lesquels:

- la figure 1 est une vue schématique d'une machine de mise en oeuvre du procédé de l'invention permettant la fabrication d'une virole;
- la figure 2 est une vue de côté du poste d'amincissement d'un flan de tôle correspondant à l'encart II représenté à la figure 1;
- la figure 3 est une vue en coupe partielle du poste d'amincissement représenté à la figure 2 suivant la ligne III-III, dans laquelle seul le flan de tôle est représenté en coupe;
- la figure 4 est une vue en perspective d'un poste de formage et de soudage d'une virole correspondant à l'encart IV représenté à la figure 1;
- la figure 5 est une vue en coupe partielle d'un dispositif de soudure de la virole, dans laquelle seule la virole a été représentée en coupe;
- les figures 6 et 7 sont des vues en coupe d'une partie de la virole illustrant deux variantes de soudure longitudinale de celle-ci;
- la figure 8 est une vue en coupe partielle d'un poste d'amincissement des deux bordures de la virole seule représentée en coupe;
- la figure 9 est une vue en élévation, moitié en coupe, moitié en vue externe, de part et d'autre d'un axe longitudinal, du poste de soudure d'un fond et d'un dôme aux bordures de la virole.

Suivant la forme de réalisation choisie et représentée, l'appareil, pour la mise en oeuvre de procédé selon l'invention, comporte différents postes de mise en forme d'une tôle pour obtenir un emballage cylindrique.

Un poste de découpe des tôles 10 en bandes 11 puis en flans 12, disposé en aval d'un premier magasin 13 de stockage des tôle 10, comprend une première et une deuxième séries de galets de découpe 14 et 15 respectivement d'axes de rotation X-X et Y-Y perpendiculaires entre eux.

Dans la suite de la description ces axes X-X et Y-Y seront pris comme références de direction.

Sur les figures les flèches indiquent le sens de défilement des tôles, aux différents stades de leur mise en forme, ainsi que les sens de rotation des différents éléments rotatifs de cet appareil.

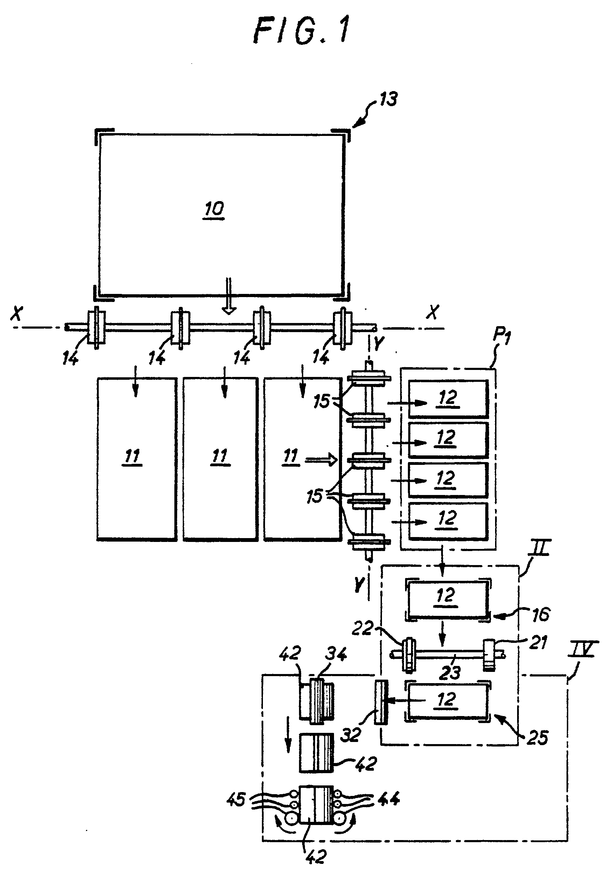

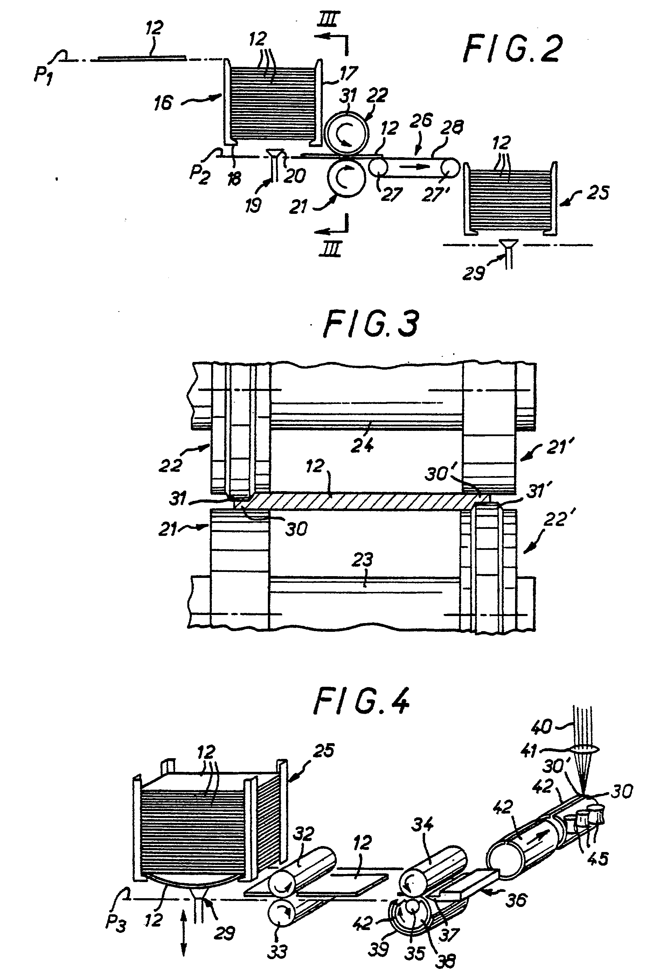

Un deuxième magasin 16, représenté aux figures 1 et 2 est constitué, de manière connue en soi, de colonnes 17 qui comportent des griffes inférieures 18 de soutien des flans 12 qui sont empilés entre ces colonnes 17.

Ce magasin 16 a sa partie supérieure qui est disposée à un niveau légèrement inférieur à celui du plan P1 d'amenée des flans qui est le plan de la figure 1, un dispositif de prélèvement 19 de ces flans muni par exemple d'une ventouse 20, est disposé endessous de ce magasin 16.

Un poste de formage, représenté aux figures 1, 2 et 3 comporte deux ensembles comprenant chacun un premier galet 21, 21' presseur et un deuxième galet 22, 22', muni d'une collerette saillante 31, 31'. Les galets 21, 22' d'une part et 22, 21' d'autre part sont reliés par des axes 23, 24 respectifs disposés parallèlement à X-X, et situés de part et d'autre d'un plan horizontal P2 d'amenée des flans 12 qui est situé à un niveau inférieur à celui du deuxième magasin 16, de telle manière que chacun des deux bords transversaux 30 et 30' d'un flan 12 soit enserré entre un premier galet 21, 21' et un deuxième galet 22, 22', respectivement.

Un troisième magasin 25 de structure identique à celle du deuxième magasin 16 est disposé en aval d'un tapis roulant 26 rebouclé autour de deux cylindres 27 et 27' dont la partie supérieure 28 est au niveau du plan d'amenée P2 des flans 12 en sortie du poste de formage.

Un deuxième dispositif de prélèvement 29, (identique au dispositif 19) des flans 12 empilés dans ce troisième magasin 25 est placé en-dessous de celui-ci.

Un poste de roulage représenté aux figures 1 et 4 comporte deux cylindres 32, 33 d'axes de rotation parallèles à Y-Y d'acheminement des flans 12 disposés l'un au-dessus de l'autre, en aval du troisième magasin 25, de part et d'autre du plan P3 d'amenée des flans suivis de deux cylindres 34, 35 d'axes de rotation parallèles à Y-Y disposés l'un au-dessus de l'autre, de part et d'autre de ce plan P3 d'amenée des flans, associés à une pièce 36 allongée dans la direction Y-Y munie d'une extrémité 37 en biseau disposée le long d'une génératrice du cylindre supérieur 34 dans le plan d'amenée des flans 12.

Le cylindre inférieur 35 est de diamètre inférieur à celui du cylindre supérieur 34 et est compris à l'intérieur d'un mandrin 38 d'axe de symétrie parallèle à Y-Y.

Une pièce 39 en forme tubulaire est disposée à la périphérie de ce mandrin 38. Tout cet agencement de formage des viroles est connu et ne fait pas partie de l'invention.

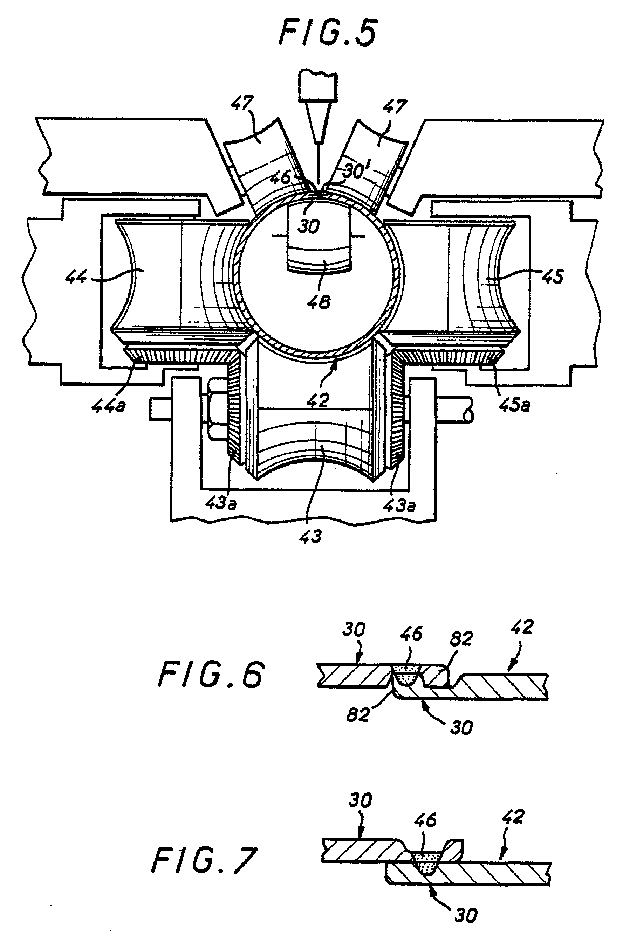

Un premier poste de soudage représenté aux figures 4 et 5 comporte un faisceau laser 40 concentré par une lentille 41 sur les bords 30 et 30' amincis d'un flan 12 préalablement roulé au poste de roulage pour former une virole 42. Ces bords 30 et 30' amincis sont maintenus en recouvrement par des galets de calibrage motorisés. Plus précisément, on prévoit un ou plusieurs groupes de tels galets motorisés 43, 44, 45 à génératrice concave, épousant la surface extérieure de la virole. Les axes des gales 44 et 45 sont parallèles et tous deux perpendiculaires à l'axe du galet 43. Ce dernier est entraîné en rotation par son axe et comporte des couronnes dentées 43a orientées à 45° à chacune de ses extrémités axiales. Ces couronnes sont respectivement en prise avec des couronnes dentées analogues 44a, 45a prévues sur les galets 44 et 45, respectivement. Ces trois galets sont en appui sur environ les trois quarts de la circonférence de la virole. Cet agencement assure un défilement à vitesse constante de la virole sous le faisceau laser avec des contraintes mécaniques sur ladite virole, parfaitement contrôlées. On évite ainsi la création de tout couple de basculement ou de rotation de la virole, particulièrement en fin de soudure. L'agencement est complété (pour chaque groupe de galets mororisés), par une paire de galets fous 47 à génératrice concave prenant appui sur la partie supérieure de la virole de part et d'autre de la ligne de soudure et par un galet interne 48 à génératrice convexe contre lequel les bords 30 et 30' sont maintenus en appui.

Tous ces galets ont leurs axes de rotation perpendiculaires à l'axe de symétrie de la virole.

Un second poste de formage des bordures 50 et 50' de la virole 42 préalablement formée et soudée au premier poste de soudage, comporte deux mandrins 51, 51' rotatifs coaxiaux de maintien de cette virole 42 munis chacun en leur extrémité d'une portée 52 et 52' cylindrique: la virole 42 ayant ses deux bordures 50 et 50' enfilées sur ces deux portées 52 et 52'. Une tige 55 d'axe de rotation parallèle à celui des mandrins 51 et 51' et extérieure à ceux-ci est munie de deux galets 56 et 56' comportant chacun une collerette saillante 57, 57' qui, dans l'exemple représenté, est de section trapézoïdale, les deux côtés formant un angle de 45°, et qui est disposée contre une des deux bordures 50 et 50' de la virole 42 en regard d'une portée cylindrique 52, 52' d'un des deux mandrins 51 ou 51'.

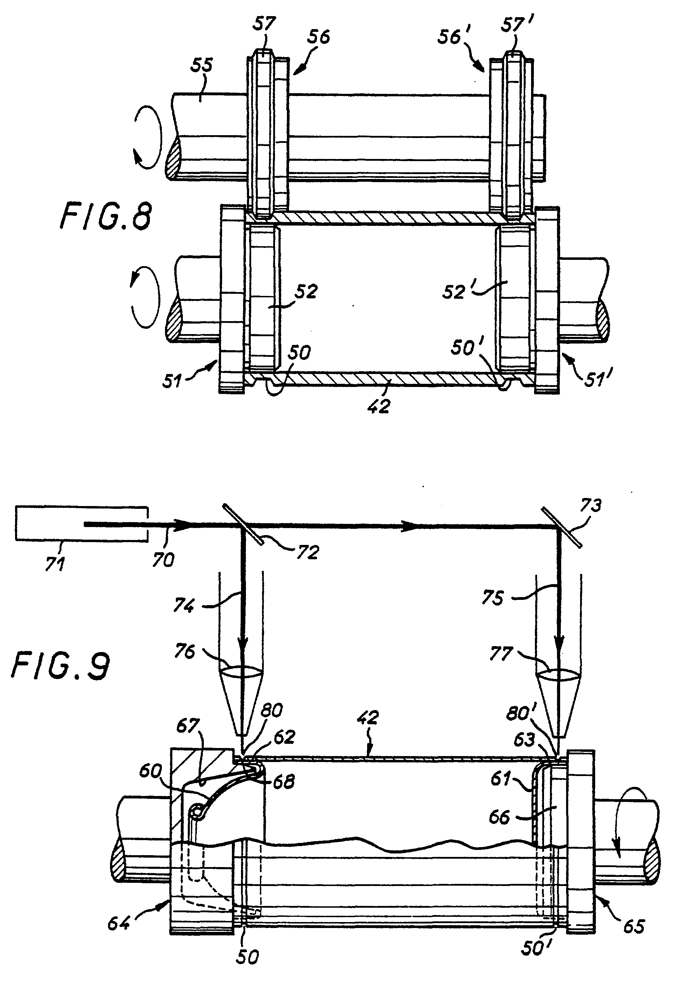

Un second poste de soudage de la virole 42 sur laquelle ont été rapportés un dôme 60 et un fond 61, préalablement emboutis pour avoir une portée cylindrique 62, 63 prévue pour s'adapter respectivement à l'intérieur des deux bordures 50 et 50' de la virole 42, est représenté à la figure 9. Il comporte deux mandrins 64, 65 tournants, coaxiaux et conformés pour maintenir l'ensemble fond 61 virole 42 et dôme 60.

L'un 65 de ces mandrins est muni d'une portée 66 cylindrique disposée à l'intérieur de la bordure 50 de la virole 42 liée au fond 61 et l'autre 64 est muni d'un alésage 67 intérieur tronconique coaxial dans lequel est disposé le dôme 60 et d'une portée 68 cylindrique extérieure qui est disposée entre le dôme 60 et les bordures 50 en contact de la virole 42 et de ce dôme 60.

Un faisceau 70 issu d'une source laser 71, qui dans l'exemple décrit est d'une puissance de 1kW, se subdivise par réflexion sur une lame semi-réfléchissante 72 et un miroir 73 en deux pinceaux 74, 75 verticaux qui sont focalisés par deux lentilles 76, 77 sur les bords en contact de la virole 42 et respectivement du fond 61 et du dôme 60, aux endroits où la virole a été préalablement amincie.

Sur les figures, les moyens connus de l'homme de l'art qui permettent le déplacement des flans d'un poste à un autre, ont été représentés sous la forme de plans d'amenée P1, P2 et P3.

Dans la description du procédé de l'invention, les tôles 10 issues du premier magasin 13 sont cisaillées à l'aide des galets de découpe 14, 15, successivement en bandes 11 et en flans 12 que l'on stocke dans un deuxième magasin 16. Ce dispositif de prélèvement 19, par exemple à ventouse, à déplacement vertical, dans une position haute prélève un flan 12 qu'il amène, en position basse, au niveau du plan P2.

Ce flan 12 défile alors entre les galets d'amincissement 21, 21' et 22, 22' pour être stocké ensuite dans un troisième magasin 25.

De la même façon que décrit plus haut, les flans 12 dont les bords 30 et 30' ont été ainsi amincis, sont prélevés un à un dans le magasin 25 par un deuxième dispositif de prélèvement 29 et après acheminement par les rouleaux 32, 33, sont progressivement recourbés pour former une virole en défilant entre les rouleaux 34, 35, en étant déviée par l'extrémité 37 en biseau de la pièce 36 pour venir se positionner entre le mandrin 38 et la pièce tubulaire 39.

Par des moyens, connus de l'homme de l'art et non représentés sur les figures: par exemple des doigts d'amenée, le flan 12 roulé en forme de virole 42 dont les bords sont maintenus en recouvrement par exemple grâce à une barre en Z, est positionné entre les galets 43, 44, 45, 47 et 48 du poste de soudage. Les deux bords 30 et 30' en recouvrement défilent alors, du fait de la rotation de ces galets, sous le faisceau laser 40. L'échauffement provoqué par le faisceau laser est tel que la zone amincie subit une fusion de part en part et que la zone de fusion s'étend à une partie de l'épaisseur de l'autre zone en recouvrement en créant ainsi un cordon de soudage 46.

Au deuxième poste de formage, les bordures 50 et 50' de la virole 42 sont amincies par rotation en sens opposés de la virole enserrée entre les deux mandrins 51 et 51' et la tige 55 munie des galets 56 et 56' comportant des collerettes saillantes 57 et 57'. Les amincissements ainsi obtenus sont complémentaires de la forme des empreintes.

On équipe alors la virole d'un fond 61 et d'un dôme 60 préalablement emboutis dont les portées 62, 63 cylindriques viennent se loger respectivement à l'intérieur de chacune des deux bordures 50 et 50' de la virole 42.

Ces bordures défilent alors, sous les deux pinceaux 74, 75 issus de la source laser 71 et forment ainsi deux lignes 80, 80' cylindriques de soudage.

L'épaisseur des tôles ainsi mises en forme et soudées selon le procédé de l'invention, avec un dispositif laser de la puissance indiquée peuvent avoir les dimensions suivantes, leus épaisseur peut être comprise entre 0,16 et 0,28 millimètres, l'épaisseur résiduelle dans les parties amincies (bords de flans, bordures de virole) peut alors être comprise entre 0,05 et 0,12 millimètres.

Dans la première phase d'amincissement les deux bords 30 et 30' transversaux des flans 12 peuvent ne pas être amincis juste à leur extrémité, une bande 82 et 82' non amincie peut subsister, comme représenté à la figure 6, ce qui permet d'encastrer les deux bords 30 et 30' l'un dans l'autre pour former une ligne longitudinale 46 de soudage par défilement sous le faisceau laser 40.

De même, seul l'un des deux bords peut être aminci. Mais, comme représenté à la figure 7, le bord 30' aminci doit être disposé à l'extérieur de la virole lors de la mise en recouvrement des deux bords 30 et 30' de flan, pour permettre une soudure.

La mise en oeuvre du procédé de l'invention permet avantageusement de réaliser également des boîtes ne comportant que deux éléments à savoir une virole et un fond.

## Revendications

1. Procédé de fabrication d'un emballage en tôle métallique du genre boîte de conserve par soudure au moyen d'un faisceau laser consistant à placer en recouvrement deux zones (30, 30' et 50, 62 et 50', 63) des parties à souder, celles-ci ayant été préalablement découpées et/ou conformées, à assembler et à souder ces deux zones par focalisation d'un faisceau laser et déplacement relatif entre ledit faisceau et lesdites zones le long d'une ligne de soudage prédéterminée, caractérisé en ce qu'il consiste, préalablement au soudage, à amincir (30, 50) par une opération de formage, au moins l'une desdites zones et à focaliser ledit faisceau laser (40) sur la zone amincie.

2. Procédé selon la revendication 1, caractérisé en ce que:
   − on amincit au moins l'un de deux bords opposés transversaux (30, 30') d'un flan (12) de tôle prédécoupé;
   − on roule ce flan (12) pour former une virole (42) en amenant un bord transversal aminci en recouvrement de l'autre bord transversal selon une ligne de soudage (46) longitudinale;
   − on soude ces deux bords (30, 30') le long de ladite ligne de soudage par ledit déplacement relatif.

3. Procédé selon la revendication 2, caractérisé en ce que:
   − on amincit, selon au moins une ligne de soudage (80, 80') circulaire, au moins une des deux bordures (50, 50') de ladite virole (42);
   − on rapporte au moins un élément (60, 61) préalablement embouti à l'intérieur d'une bordure (50, 50') amincie de cette virole (42);

– on soude le ou chaque élément (60, 61) rapporté à la virole par déplacement relatif entre ledit faisceau et ladite virole le long d'une ligne de soudure circulaire située dans ladite bordure amincie.

4. Procédé selon la revendication 2, caractérisé en ce qu'on amincit au moins l'un des deux bords (30, 30') d'un flan (12) de tôle prédécoupé en laissant subsister une bande (82, 82') non amincie en son extrémité.

5.- Procédé selon la revendication 2, caractérisé en ce qu'on amincit une des deux bordures (50, 50') de la virole en laissant subsister une zone non amincie en son extrémité.

6.- Procédé selon l'une quelconque des revendications 2 à 5, caractérisé en ce que les zones amincies ont des rebords inclinés à 45°.

7.- Procédé selon l'une quelconque des revendications précédentes, caractérisé en ce qu'on amincit une zone d'un élément de l'emballage, par défilement entre un galet presseur (21, 21', 52, 52') et un galet (22, 22', 56, 56'), muni d'une collerette saillante (31, 31', 57, 57') de forme complémentaire de l'amincissement.

8.- Procédé selon la revendication 3, caractérisé en ce qu'on amincit les bordures (50, 50') de la virole (42) par rotation en sens opposés de cette virole (42) qui est enserrée entre deux portées cylindriques (52, 52') de deux mandrins (51, 51') coaxiaux, et d'une tige (55) d'axe de rotation parallèle à celui des mandrins (51, 51') munie de deux galets (56, 56') munis de collerettes saillantes (57, 57') disposées entre ces bordures.

9.- Procédé selon la revendication 3, caractérisé en ce qu'on soude un dôme (60) et un fond (61) à la virole (42) en maintenant l'ensemble dôme (60), virole (42), fond (61) entre deux mandrins (64, 65) en rotation. de telle sorte que les zones de soudage (80, 80') circulaires défilent sous deux pinceaux laser (74, 75).

10.- Procédé selon l'une quelconque des revendications 1 à 9, caractérisé en ce qu'on utilise des tôles d'épaisseur comprises entre 0,16 et 0,28 millimètres.

11.- Procédé selon la revendication 10, caractérisé en ce qu'on amincit ces tôles pour obtenir une épaisseur résiduelle comprise entre 0,05 et 0,12 millimètres.

12. Procédé selon l'une quelconque des revendications 1 à 11, caractérisé en ce qu'on soude d'une part les bords (30 et 30') d'un flan (12) pour former une virole (42) et d'autre part un dôme (60) et un fond (61) à cette virole (42) à l'aide d'une source laser (71) d'une puissance voisine de 1kW.

13. Procédé selon l'une des revendications 2 à 12, caractérisé en ce que, pendant la soudure de formation de ladite virole, on maintient et déplace le flan roulé avec des galets (43, 44, 45) motorisés à génératrice concave épousant la surface extérieure de ladite virole en formation, lesdits galets motorisés tournant à une même vitesse prédéterminée.

14. Procédé selon la revendication 13, caractérisé en ce qu'on déplace ledit flan roulé, à l'aide d'au moins un groupe de trois galets motorisés, l'un (43) des galets étant entraîné par son axe, et comportant à ses extrémités axiales des couronnes dentées (43a) en prise avec des couronnes dentées analogues (44a, 45a) prévues sur les deux autres galets (44, 45) d'axes perpendiculaires à celui du galet (43) entraîné par son axe.

## Claims

1. A process for manufacturing by laser beam welding a cylindrical sheet metal package, of the kind for containing preserved foods, which consists in overlapping two zones (30, 30' and 50, 62 and 50', 63) of the parts to be welded, these parts having been previously cut and/or shaped, and in assembling and welding these two zones by focussing a laser beam and by causing relative movement between the said beam and the said zones along a predetermined welding line, characterized in that it consists in thinning (30, 50) at least one of the said zones by a forming operation, prior to welding, and in focussing the said.laser beam (40) on the thinned zone.

2. A process according to Claim 1, characterized in that:
– at least one of the two opposite transverse edges (30, 30') of a pre-cut sheet metal blank (12) is thinned;
– this blank (12) is rolled to form a cylinder (42) by overlapping one transverse thinned edge over the other transverse edge along a longitudinal welding line (46);
– these two edges (30, 30') are welded along the said welding line by the said relative movement.

3. A process according to Claim 2, characterized in that:
– at least one of the two end edges (50, 50') of the said cylinder (42) is thinned along at least one circular welding line (80, 80');
– at least one previously pressed out element (60, 61) is attached to the inside of a thinned end edge (50, 50') of the said cylinder (42);
– the or each element (60, 61) attached to the cylinder is welded by relative movement between the said beam and the said cylinder along a circular welding line situated in the said thinned end edge.

4. A process according to Claim 2, characterized in that at least one of the two edges (30, 30') of a precut sheet metal blank (12) is thinned whilst a band (82, 82') which is not thinned is allowed to remain at its end.

5. A process according to Claim 2, characterized in that one of the two end edges (50, 50') of the cylinder is thinned whilst a zone which is not thinned is allowed to remain at its end.

6. A process according to any one of Claims 2 to 5, characterized in that the thinned zones have shoulders inclined at 45°.

7. A process according to any one of the preceding Claims, characterized in that a zone of an element of the package is thinned by passing between a pressure roller (21, 21', 52, 52') and a roller (22, 22', 56, 56') equipped with a projecting circular flange (31, 31', 57, 57') having a shape complementary to the thinned zone.

8. A process according to Claim 3, characterized in that the end edges (50, 50') of the cylinder (42) are thinned by the rotation, in the opposite direction to the cylinder (42) which is held between two cylindrical bearings (52, 52'), of two coaxial mandrels (51, 51') and a shaft (55) having an axis of rotation parallel to that of the mandrels (51, 51') and equipped with two rollers (56, 56') equipped with projecting circular flanges (57, 57') disposed between these end edges.

9. A process according to Claim 3, characterized in that a dome (60) and a bottom (61) are welded to the cylinder (42) by holding the assembly consisting of dome (60), cylinder (42) and bottom (61) between two rotating mandrels (64, 65) in such a way that the circular welding zones (80, 80') pass beneath two laser pencil beams (74, 75).

10. A process according to any one of Claims 1 to 9, characterized in that metal sheets having a thickness between 0.16 and 0.28 millimetres are used.

11. A process according to Claim 10, characterized in that the metal sheets are thinned to obtain a final thickness beween 0.05 and 0.12 millimetres.

12. A process according to any one of Claims 1 to 11, characterized in that, on the one hand, the edges (30 and 30') of a blank (12) are welded to form a cylinder (42) and, on the other hand, a dome (60) and a bottom (61) are welded to this cylinder (42) by means of a laser source (71) having a power of about 1 kW.

13. A process according to any one of Claims 2 to 12, characterized in that, during the welding to form the said cylinder, the rolled blank is held and moved by driven rollers (43, 44, 45) with a concave generatrix matching the external surface of the said cylinder which is being formed, the said driven rollers turning at the same predetermined speed.

14. A process according to Claim 13, characterized in that the said rolled blank is moved by means of at least one group of three driven rollers, one (43) of which rollers is driven by its axle and comprises at its axial ends toothed crowns (43a), engaged with similar toothed crowns (44a, 45a) provided on the two other rollers (44, 45), which have axes perpendicular to that of the roller (43) driven by its axle.

**Patentansprüche**

1. Verfahren zur Herstellung einer Blechemballage der Art einer Konservendose durch Schweißen mit Hilfe eines Laserstrahls, das darin besteht, daß man zwei Zonen (30, 30' und 50, 52 und 50', 63) von zu verschweißenden Teilen in Überlappung bringt, welche zuvor zugeschnitten und/oder geformt worden sind, diese beiden Zonen vereinigt und verschweißt durch Fokussierung eines Laserstrahls und durch relative Verschiebung zwischen dem genannten Strahl und den genannten Zonen entlang einer vorbestimmten Schweißlinie, dadurch gekennzeichnet, daß es darin besteht, vor dem Verschweißen wenigstens eine der genannten Zonen durch einen Verformungsvorgang zu verdünnen (30, 50) und den Laserstrahl (40) auf die verdünnte Zone zu fokussieren.

2. Verfahren nach Anspruch 1, dadurch gekennzeichnet, daß

– man wenigstens eine der beiden entgegengesetzten Querränder (30, 30') eines vorgeschnittenen Blechzuschnittes (12) verdünnt;
– man den Zuschnitt (12) anrollt, um einen Mantel (42) zu bilden, indem man einen verdünnten Querrand mit dem anderen Querrand entlang einer Längsschweißlinie (46) in Überlappung bringt;
– man die beiden Ränder (30, 30') entlang der genannten Schweißlinie durch die genannte Relativbewegung miteinander verschweißt.

3. Verfahren nach Anspruch 2, dadurch gekennzeichnet, daß
– man entlang wenigstens einer kreisförmigen Schweißlinie (80, 80') wenigstens einen der beiden Ränder (50, 50') des genannten Mantels (42) verdünnt;
– man wenigstens ein zuvor tiefgezogenes Element (60, 61) innerhalb der verdünnten Kante (50, 50') dieses Mantels einbringt;
– man das oder jedes in den Mantel eingesetzte Element (69, 61) durch Relativbewegung zwischen dem genannten Strahl und dem genannten Mantel entlang einer kreisförmigen Schweißlinie verschweißt, die in dem genannten verdünnten Rand verläuft.

4. Verfahren nach Anspruch 2, dadurch gekennzeichnet, daß man wenigstens einen der beiden Ränder (30, 30') eines Zuschnittes (12) des vorgeschnittenen Bleches verdünnt und dabei ein Band (82, 82') an seinem äußersten Ende unverdünnt beläßt.

5. Verfahren nach Anspruch 2, dadurch gekennzeichnet, daß man einen der beiden Ränder (50, 50') des Mantels verdünnt, indem man eine unverdünnte Zone an dessen äußerstem Bereich beläßt.

6. Verfahren nach irgendeinem der Ansprüche 2 bis 5, dadurch gekennzeichnet, daß die verdünnten Zonen Ränder von 45° Neigung aufweisen.

7. Verfahren nach irgendeinem der voranstehenden Ansprüche, dadurch gekennzeichnet, daß man eine Zone eines Emballageelementes verdünnt, indem man es zwischen einer Duckrolle (21, 21', 52, 52') und einer Rolle (22, 22' 56, 56') hindurchleitet, welche mit einem eingeschnürten Kragen (31, 31', 57, 57') von einer Form ausgestattet ist, die dem verdünnten Bereich komplimentär ist.

8. Verfahren nach Anspruch 3, dadurch gekennzeichnet, daß man die Ränder (50, 50') des Mantels (42) dadurch verdünnt, daß man den Mantel (42), der zwischen zwei zylindrischen Tragabschnitten (52, 52') von zwei koaxial angeordneten Dornen (51, 51') eingespannt ist, und eine Welle (55) mit zu den Dornen (51, 51') paralleler Drehachse entgegengesetzt rotieren läßt, welch letztere mit zwei Rollen (56, 56') ausgestattet ist, die jeweils eingeschnürte Kragen (57, 57') aufweisen, welche zwischen jenen Rändern angeordnet sind.

9. Verfahren nach Anspruch 3, dadurch gekennzeichnet, daß man einen domförmigen Teil (60) und einen Bodenteil (61) mit dem Mantel (42) verschweißt, indem man den Domteil (60), den Mantel (42) und den Bodenteil (61) zwischen zwei Dornen (64, 65) in Drehung hält, in der Weise, daß die kreisförmigen Schweißzonen (80, 80') unter zwei Laserstrahlen (74, 75) durchlaufen.

10. Verfahren nach irgendeinem der Ansprüche 1 bis 9, dadurch gekennzeichnet, daß man Bleche von einer Dicke zwischen 0,16 und 0,28 mm verwendet.

11. Verfahren nach Anspruch 10, dadurch gekennzeichnet, daß man diese Bleche verdünnt, um eine Restdicke zwischen 0,05 und 0,12 mm zu erhalten.

12. Verfahren nach irgendeinem der Ansprüche 1 bis 11, dadurch gekennzeichnet, daß man einerseits die Ränder (30 und 30') eines Zuschnittes (12) zur Bildung eines Mantels (42) und andererseits einen Domteil (60) und einen Bodenteil (61) mit diesem Mantel (42) mit Hilfe einer Laserstrahlquelle (71) mit einer Leistung im Bereich von 1 kW verschweißt.

13. Verfahren nach einem der Ansprüche 2 bis 12, dadurch gekennzeichnet, daß man vor dem Verschweißen zur Bildung des genannten Mantels den gerollten Zuschnitt mit Hilfe von angetriebenen Rollen (43, 44, 45) hält und verschiebt, welche eine konkave Erzeugende aufweisen, die der Außenfläche des genannten, in Bildung befindlichen Mantels angepaßt ist, wobei die angetriebenen Rollen mit gleicher vorbestimmter Geschwindigkeit umlaufen.

14. Verfahren nach Anspruch 13, dadurch gekennzeichnet, daß man den genannten angerollten Zuschnitt mit Hilfe wenigstens einer Gruppe von drei angetriebenen Rollen vorschiebt, von denen eine (43) über ihre Achse angetrieben wird und an ihren axialen Enden Zahnkränze (43a) in Eingriff mit analogen Zahnkränzen (44a, 45a) trägt, welche an den beiden anderen Rollen (44, 45) vorgesehen sind, deren Achsen senkrecht zu derjenigen der Rolle (43) stehen, die über ihre Achse angetrieben wird.

## FIG.1

FIG.2

FIG.3

FIG.4

# FIG.5

# FIG.6

# FIG.7

*FIG.8*

*FIG.9*